# EUROPÄISCHE PATENTSCHRIFT

(11) **EP 3 774 449 B1**
(45) Veröffentlichungstag und Bekanntmachung des Hinweises auf die Patenterteilung: **11.05.2022**
(21) Anmeldenummer: 19713752.4
(22) Anmeldetag: 22.03.2019
(51) Int. Cl.: B60R 11/02

(54) **HALTESYSTEM ZUM BEFESTIGEN EINES BILDSCHIRMS AN EINEM TRÄGERELEMENT EINES FAHRZEUGS, BILDSCHIRMSYSTEM**
HOLDING SYSTEM FOR FASTENING A SCREEN TO A CARRIER ELEMENT OF A VEHICLE, SCREEN SYSTEM
SYSTÈME DE MAINTIEN DESTINÉ À FIXER UN ÉCRAN À UN ÉLÉMENT PORTEUR D'UN VÉHICULE, SYSTÈME D'ÉCRAN

(30) Priorität: 26.03.2018 DE 102018204548
(43) Veröffentlichungstag der Anmeldung: 17.02.2021
(73) Patentinhaber: Robert Bosch GmbH, 70442 Stuttgart (DE)
(72) Erfinder: MEEMANN, Daniel, 31139 Hildesheim (DE); GONCALVES VENDA, Helder Bruno, 4700-757 Palmeira, Braga (PT); KALLINICH, Rainer, 31139 Hildesheim (DE)
(86) Internationale Anmeldenummer: PCT/EP2019/057282
(87) Internationale Veröffentlichungsnummer: WO 2019/185484

(56) Entgegenhaltungen:
- EP-A1- 1 550 583
- US-A1- 2005 052 046
- US-A1- 2007 057 541

## Beschreibung

Die Erfindung betrifft ein Haltesystem zur Befestigung eines Bildschirms an einem Trägerelement eines Fahrzeugs, mit einer an dem Bildschirm angeordneten oder anordenbaren Hakenanordnung.

Weiterhin betrifft die Erfindung ein Bildschirmsystem für ein Fahrzeug, das das vorstehend genannte Haltesystem aufweist.

### Stand der Technik

Werden Bildschirme im Fahrzeuginnenraum beispielsweise auf der Höhe der A-Säule installiert, beispielsweise als Ersatz für einen Außenspiegel, so werden sie üblicherweise mit starren Haltern direkt an einem Armaturenbrett oder an der Karosserie verschraubt, wobei die Schrauben an der Rückseite des Bildschirms angebracht sind. Auch bekannt ist es, den Bildschirm rundherum in ein Gehäuse zu klemmen, das wiederum durch Schrauben auf der Rückseite mit der Karosserie verbunden ist. Auch Schnapphaken werden genutzt, um insbesondere kleinere Bildschirme im Fahrzeug zu befestigen.

Aus der Offenlegungsschrift DE 20 2011 052 313 U1 ist beispielsweise ein Haltesystem bekannt, mittels dessen unterschiedlich große Bildschirme, wie beispielsweise Mobiltelefone, im Innenraum des Kraftfahrzeugs befestigbar sind. Die Einrichtung weist mehrere Haken auf, zwischen denen das Mobiltelefon anordenbar ist. Die Halterung weist eine Halterahmenschale auf, die ein Aufschieben auf ein Befestigungselement der Karosserie ermöglicht. Aus der Offenlegungsschrift WO 2017/025504 A1 ist ein weiteres Haltesystem bekannt, das insbesondere zur Halterung unterschiedlich großer Bildschirme dient und hierzu, ebenso wie in der vorgenannten Druckschrift, in einen unterschiedlichen Abstand zueinander positionierbare Hakenelemente aufweist. Aus der Gebrauchsmusterschrift DE 20 2017 004 085 U1 ist weiterhin ein Haltesystem bekannt, das das Anordnen eines Bildschirms an einem Ausströmer einer Lüftungsanlage des Fahrzeugs erlaubt. Dazu weist das Haltesystem eine Halterung mit Halteklammern zum Umgreifen jeweils einer Lüftungslamelle des Ausströmers auf. Aus der Offenlegungsschrift EP 1 550 583 A1 ist eine Lösung bekannt, bei welcher der Bildschirm durch eine Schnapphakenverbindung an einem Gehäuse, das zuvor an der Karosserie des Kraftfahrzeugs zu befestigen ist, anordenbar ist. Aus der Offenlegungsschrift US 2012/0018471 A1 ist weiterhin ein Haltesystem bekannt, das die Befestigung eines Bildschirms an den Streben einer Nackenstütze eines Fahrzeugsitzes des Fahrzeugs erlaubt.

### Offenbarung der Erfindung

Das erfindungsgemäße Haltesystem mit den Merkmalen des Anspruchs 1 hat den Vorteil, dass es einfach und kostengünstig herstellbar ist, eine einfache Montage mit wenigen Schritten erlaubt, und vielseitig verwendbar ist. Aufgrund seiner Einfachheit ist das Haltesystem darüber hinaus auch besonders robust und hält auch höheren Kräften stand, sodass es auch dazu in der Lage ist, größere Bildschirme sicher im Fahrzeug zu halten. Trotz der dafür gegebenenfalls notwendigen Größe und des damit beschränkten Montageraums ist die Montage einfach durchführbar. Insbesondere kann das Haltesystem auch bei unterschiedlichen Fahrzeugumgebungen und unterschiedlichen Bauräumen genutzt werden, da es mehrere Befestigungsmöglichkeiten bei einer hohen Anzahl von Gleichteilen bietet. Erfindungsgemäß wird dies dadurch erreicht, dass die Hakenanordnung zumindest ein Paar gleicher Haken aufweist, wobei jeder Haken zwei einander gegenüberliegende Seitenwände und einen die Seitenwände miteinander verbindenden Boden aufweist, die zusammen eine Bolzenaufnahme zur Aufnahme eines Haltebolzens bilden, wobei eine in die Bolzenaufnahme mündende Schraubenöffnung in dem Boden ausgebildet ist, und wobei die Haken des Paars beabstandet zueinander unbeweglich derart an dem Bildschirm oder an dem Trägerelement angeordnet sind, dass die Bolzenaufnahmen einander zuweisend einander gegenüberliegen. Die Erfindung sieht also vor, dass die Haken an dem Bildschirm angeordnet oder anordenbar sind und somit von dem Bildschirm, insbesondere von dessen Rückseite vorstehen, um mit dem Trägerelement zusammenzuwirken. Die Haken sind dabei unbeweglich an dem Bildschirm angeordnet beziehungsweise anordenbar, sodass sich ihre Position im am Bildschirm montierten Zustand nicht verändert. Weil die Bolzenaufnahme jedes Hakens durch zwei einander gegenüberliegende Seitenwände und ein die Seitenwände miteinander verbindenden Boden gebildet wird, weist sie im Wesentlichen eine U-Form auf und ist von drei Seiten zugängig. Zum einen ergibt sich eine Aufnahmeöffnung, die in die Bolzenaufnahme führt, welche durch die lichte Weite der zwei einander gegenüberliegenden Seitenwände auf der vom Boden abgewandten Seite, also an dem vom Boden abgewandten Ende der beiden Seitenwände definiert ist. Darüber hinaus ist die Bolzenaufnahme randoffen ausgebildet, sodass ein Haltebolzen nicht nur durch die Aufnahmeöffnung in Richtung des Bodens in die Aufnahme einschiebbar ist, sondern auch parallel zu dem Boden und den Seitenwänden beziehungsweise axial in die Bolzenaufnahme einführbar ist. Hierdurch ergeben sich unterschiedliche Montagemöglichkeiten mit ein und dem gleichen Hakenelement. Weil sich die Haken des Paars einander gegenüberliegen, sodass die Bolzenaufnahmen aufeinander zu weisen, fluchten die Bolzenaufnahmen miteinander und es ist nicht möglich, zwei Haltebolzen, die an dem Trägerelement fixiert sind, durch ein seitliches Bewegen der Hakenelemente derart, dass die Haltebolzen durch die Aufnahmeöffnung in die Bolzenaufnahme gelangen, zu montieren. Vielmehr kann dies nur an einem der Haltebolzen erfolgen, während der andere dann beispielsweise axial in die verbleibende Bolzenaufnahme des anderen Hakens nachträglich eingeschoben wird. Durch die vorhandene Schraubenöffnung in dem Boden des jeweiligen Hakens ist außerdem eine Querverbindung zu dem Trägerelement möglich. So kann beispielsweise an einem der Haken ein Haltebolzen angeordnet werden, und in dem anderen Haken eine Befestigungsschraube, die in die Schraubenöffnung eingeschraubt ist und dadurch beide Haken sicher an dem Trägerelement fixiert. Hierauf wird weiter unten näher eingegangen. Auch kann durch die Schraubenöffnung ein Befestigungsstift geschoben werden, der Querkräfte aufnimmt und dadurch eine eindeutige Positionierung und Lagerung des Bildschirms an dem Trägerelement gewährleistet.

Gemäß einer bevorzugten Ausführungsform weist die jeweilige Bolzenaufnahme einen Hinterschnitt auf, der insbesondere in die Richtung von der Aufnahmeöffnung zu dem Boden wirkt. Wird somit ein Haltebolzen durch die Aufnahmeöffnung seitlich in die Bolzenaufnahme eingeschoben, kann er mit dem Hinterschnitt derart zusammenwirken, dass er formschlüssig in der Bolzenaufnahme arretiert ist, zumindest in Richtung der Aufnahmeöffnung. Der Hinterschnitt wird beispielsweise dadurch gebildet, dass die Seitenwände zueinander, ausgehend von dem Boden, eine sich verändernde lichte Weite aufweisen.

Gemäß einer bevorzugten Weiterbildung der Erfindung ist zumindest eine an dem Trägerelement angeordnete oder anordenbare Bolzenanordnung vorhanden, die zumindest einen Haltebolzen aufweist, der in eine der Bolzenaufnahmen einführbar ist. Die Bolzenanordnung ist somit dem Trägerelement zugeordnet und weist insbesondere einen fest an dem Trägerelement angeordneten Bolzen auf, an welchem der Bildschirm mit der Hakenanordnung befestigbar ist. Vorzugsweise ist der oder sind die Haltebolzen vertikal an dem Trägerelement ausgerichtet. Insbesondere wird der Bildschirm durch seitliches Einschieben des fest angeordneten Haltebolzens in die Bolzenaufnahme eines der Haken seitlich eingeschoben, und anschließend ein zweiter Haltebolzen der Bolzenanordnung axial durch die Bolzenaufnahme des verbleibenden Hakens geschoben und an dem Trägerelement befestigt. Hierdurch ist eine vollständige Befestigung des Bildschirms an dem Trägerelement auf einfache Art und Weise ermöglicht. Weil die Haken gleich ausgebildet sind, ist die Montage sowohl auf der linken als auch auf der rechten Seite des Fahrzeugs möglich, wobei insbesondere eine spiegelverkehrte Montage vorgesehen ist. So ist beispielsweise der türfern angeordnete Haltebolzen fix und der türnah angeordnete Haltebolzen axial verlagerbar, sodass bei der Montage der Bildschirm mit dem einen Haken zunächst an dem fixen Bolzen eingehakt und anschließend durch das Hinzufügen des zweiten Haltebolzens befestigt wird. Weil der bewegliche Haltebolzen türnah angeordnet ist, ist eine einfache Montage für den Monteur auch bei geringem Bauraum möglich.

Besonders bevorzugt ist für zumindest einen der Haken eine Befestigungsschraube vorhanden, die einerseits die Schraubenöffnung durchgreift und andererseits mit einem Innengewinde der Schraubenöffnung und/oder einem Innengewinde des in der Bolzenaufnahme eingeführten Haltebolzens verschraubt oder verschraubbar ist. Durch die Befestigungsschraube ist somit eine axiale Fixierung des Haltebolzens in der Bolzenaufnahme gewährleistet. Dabei ist die Befestigungsschraube entweder direkt in den Haltebolzen eingeschraubt, sodass sie auf Zug belastet wird, oder in ein Schraubgewinde der Schraubenöffnung, sodass sie den Haltebolzen durch eine Druckkraft zu dessen Arretierung beaufschlagt.

Weiterhin ist bevorzugt vorgesehen, dass in der Bolzenaufnahme des einen der Haken des Paars der Haltebolzen und in der Schraubenöffnung des anderen Hakens des Paars die Befestigungsschraube oder ein Befestigungsstift angeordnet sind. Damit weist die Bolzenanordnung nur einen Haltebolzen auf sowie die Befestigungsschraube oder den Befestigungsstift, die seitlich durch die Schraubenöffnung eingeschoben sind und dadurch eine Querkraft beziehungsweise Querkraftlagerung für den entsprechenden Haken der Hakenanordnung gewährleisten. Insbesondere ist die Befestigungsschraube oder der Befestigungsstift an der türnahen Seite des Haltesystems angeordnet.

Weiterhin ist bevorzugt vorgesehen, dass an dem Trägerelement der zumindest eine Haltebolzen sowie ein eine weitere Schraubenöffnung aufweisender Haltevorsprung beabstandet und einander gegenüberliegend angeordnet sind, sodass der Haltebolzen mit dem einen Haken des Bildschirms zusammenwirkt, und die Befestigungsschraube oder der Befestigungsstift durch die weitere Schraubenöffnung und die Schraubenöffnung des anderen Hakens des Paars geführt oder führbar ist, um den Bildschirm an dem Trägerelement zu befestigen. Dadurch, dass der Befestigungsstift oder die Befestigungsschraube durch die weitere Schraubenöffnung des Trägerelements geführt sind, ist eine sichere und einfache Arretierung des Bildschirms an dem Trägerelement und damit an dem Fahrzeug gewährleistet.

Weiterhin ist bevorzugt vorgesehen, dass der zumindest eine Haltebolzen zumindest innerhalb eines begrenzten Bereichs um eine Längsachse verschwenkbar in der Halteaufnahme des Hakens gelagert/lagerbar ist. Der Haltebolzen und die Bolzenaufnahme bilden somit zusammen ein Kipplager, um welches der Haltebolzen innerhalb des begrenzten Bereichs verschwenkbar gelagert ist. Ist der Haltebolzen fest an dem Trägerelement angeordnet, ergibt sich dadurch, dass der Bildschirm nach dem Einführen des Haltebolzens in die Bolzenaufnahme eines der Hakenelemente innerhalb des begrenzten Bereichs verkippbar um den Haltebolzen an dem Trägerelement gelagert ist. Dadurch ergibt sich eine besonders einfache Montage, weil der Monteur zunächst den Bildschirm an einem Haltebolzen anordnet, ihn innerhalb des verschwenkten Bereichs in seine Endposition schwingt und dort beispielsweise mit der Befestigungsschraube und/oder dem Befestigungsstift an dem anderen Haken des Paars von Haken befestigt. Weil die Schraubenöffnung im Boden des jeweiligen Hakens ausgebildet ist, und die Befestigungsschraube, wie vorstehend bereits erwähnt, vorzugsweise an der türnahen Seite des Bildschirms anzubringen/angebracht ist, ist die Befestigungsschraube einfach seitlich in die Schraubenöffnung einführbar, wobei davon ausgegangen wird, dass der Haltebolzen in seiner Längserstreckung vertikal ausgerichtet ist.

Gemäß einer bevorzugten Weiterbildung ist der Haltebolzen in der Bolzenaufnahme zwischen einer formschlüssig in der Bolzenaufnahme arretieren Hintergriffposition und einer seitlich aus der Bolzenaufnahme entfernbaren Freigabeposition verschwenkbar ist. Die Richtungsangabe "seitlich" bezieht sich hierbei auf den Haltebolzen selbst, sodass er in der Freigabeposition radial beziehungsweise seitlich zur Bolzenaufnahme herausziehbar ist beziehungsweise auch seitlich in diese einführbar ist. Dadurch, dass in der Hintergriffposition der Haltebolzen in der Bolzenaufnahme formschlüssig in der Bolzenaufnahme liegt, insbesondere aufgrund des zuvor genannten Hinterschnitts, der zusammen mit dem Haltebolzen einen Hintergriff bildet, ist eine einfache formschlüssige Arretierung des Bildschirms an dem Haltebolzen durch ein einfaches Verschwenken des Bildschirms an dem insbesondere fest an dem Trägerelement angeordneten Haltebolzens gewährleistet. Besonders bevorzugt weist der Haltebolzen dazu eine von einem Kreis abweichende Querschnittsform auf, die es erlaubt, den Haltebolzen in der Bolzenaufnahme derart zu verdrehen, dass ein Abschnitt des Haltebolzens in die Hintergriffposition mit dem Hinterschnitt der Bolzenaufnahme gelangt und in der Freigabeposition einfach aus der Bolzenaufnahme herausziehbar ist.

Weiterhin ist der vorstehend bereits genannte Haltevorsprung des Trägerelements derart ausgebildet, dass die ihm zugeordneten Haken des Bildschirms mit dem Boden an den Halteabschnitt heranschwenkbar ist, sodass die Schraubenöffnung und die weitere Schraubenöffnung miteinander fluchten. Insbesondere sind die Hakenanordnung und der Halteabschnitt derart ausgebildet, dass der dem Haltevorsprung zugeordnete Haken dicht an dem Haltevorsprung mit dem Boden anliegt, gegebenenfalls diesen sogar berührt, wodurch eine weitere Haltefunktion zwischen Haltevorsprung und Haken für den Bildschirm erreicht wird. Insbesondere wird dadurch die Robustheit des Haltesystems durch eine weitere formschlüssige Verbindung erhöht. Weil in der Endposition die Schraubenöffnung und die weitere Schraubenöffnung miteinander fluchten, ist das Einführen des Befestigungsstifts oder der Befestigungsschraube einfach möglich, wobei eine Fehlmontage sicher verhindert wird.

Gemäß einer bevorzugten Weiterbildung der Erfindung sind zumindest zwei Haltebolzen vorhanden, wobei jeweils einer der Haltebolzen in einen der Bolzenaufnahmen axial eingeschoben oder einschiebbar ist. Gemäß dieser Ausführungsform weist das Trägerelement somit zwei Haltebolzen auf, die insbesondere fest zueinander angeordnet sind, sodass nur ein axiales Einführen in die Bolzenaufnahmen der zwei gegenüberliegenden Haken möglich ist. Dadurch ist der Bildschirm nicht durch ein Schwenkvorgang, wie vorstehend beschrieben, sondern durch ein axiales Aufdrehen auf die Haltebolzen an dem Trägerelement fixierbar. Optional sind ein oder mehrere Befestigungsschrauben in jeweils eine der Schraubenöffnung eingeführt, um eine axiale Fixierung des Bildschirms an den Haltebolzen zu erreichen, wie vorstehend bereits beschrieben.

Gemäß einer bevorzugten Weiterbildung der Erfindung weist das Trägerelement für jeden der Haltebolzen zumindest eine Durchgangsöffnung auf, die derart ausgebildet ist, dass die Bolzenaufnahmen fluchtend mit den Durchgangsöffnungen positionierbar sind, um durch das Einschieben jeweils eines Haltebolzens durch die Durchgangsöffnung und die Bolzenaufnahme des zugeordneten Hakens den Bildschirm an dem Trägerelement zu befestigen. In diesem Fall werden die Haltebolzen nicht an dem Trägerelement vormontiert, sondern werden erst zur Montage des Bildschirms an dem Trägerelement montiert, um den Bildschirm an dem Trägerelement zu befestigen. Die Durchgangsöffnungen sind dabei derart ausgebildet, dass die Haltebolzen mit nur geringem radialen Spiel in den Durchgangsöffnungen gehalten sind, um eine eindeutige Positionierung des Bildschirms an dem Trägerelement zu gewährleisten. Insbesondere weisen die Durchgangsöffnungen elastisch verformbare Dämpfungselemente auf, die zwischen dem jeweiligen Haltebolzen und dem Trägerelement wirken, um Klappergeräusche bei Auftreten von Vibrationen im Fahrbetrieb zu vermeiden.

Gemäß einer vorteilhaften Weiterbildung der Erfindung ist das Trägerelement wannenförmig ausgebildet, sodass die Haken des Bildschirms in einer wannenförmigen Vertiefung des Trägerelements anordenbar sind. Dadurch sind die Haken des Bildschirms nach erfolgter Montage zumindest im Wesentlichen versteckt in dem Trägerelement angeordnet, sodass einerseits ein hochwertiger optischer Eindruck erzielt wird und andererseits eine Manipulation des Haltesystems nachträglich verhindert ist. Durch die wannenförmige Vertiefung sind außerdem die Durchgangsöffnungen in einfacher Art und Weise im Rand der wannenförmigen Vertiefung ausbildbar.

Gemäß einer bevorzugten Weiterbildung der Erfindung sind an dem Trägerelement zumindest zwei Haltebolzen fest angeordnet, sodass zumindest die Haken eines Hakenpaars auf die Haltebolzen in ihrer Längserstreckung aufschiebbar sind, um den Bildschirm an dem Trägerelement zu befestigen. Wie vorstehend bereits erwähnt, ergibt sich durch diese Variante eine einfache Anordnung des Bildschirms durch ein axiales Aufschieben auf die Haltebolzen.

Besonders bevorzugt weist die Hakenanordnung zwei Paare von Haken auf, die derart angeordnet sind, dass die Bolzenaufnahmen benachbarter Haken der Hakenpaare miteinander fluchten, um einen gemeinsamen Haltebolzen oder zwei miteinander fluchtende Haltebolzen aufzunehmen. Auch diese Variante sieht vor, dass der Bildschirm durch ein axiales Aufschieben auf die Haltebolzen oder ein nachträgliches axiales Einführen der Haltebolzen an dem Trägerelement zu befestigen. Insbesondere sind die Paare von Haken derart angeordnet, dass sie die Eckpunkte eines Quadrats oder Rechtecks bilden, wobei jeweils die Bolzenaufnahmen von zwei Haken der benachbarten Paare miteinander fluchten, sodass ein Haltebolzen durch die Bolzenaufnahme beider Haken axial hindurchführbar sind. Alternativ wird durch jede Bolzenaufnahme jedes Hakens ein einzelner Haltebolzen geführt. Dazu weist dann das Trägerelement entsprechend für jeden Haken einen eigenen Bolzen, insbesondere also vier Haltebolzen auf, die fest an dem Trägerelement angeordnet sind, und in dem gleichen Muster wie die Haken, sodass beim Aufschieben des Bildschirms mit den Haken auf die Haltebolzen in jeden Haken ein Haltebolzen eingeschoben wird.

Das erfindungsgemäße Bildschirmsystem mit den Merkmalen des Anspruchs 15 zeichnet sich durch das erfindungsgemäße Haltesystem aus. Es ergeben sich hierdurch die bereits genannten Vorteile. Weitere Vorteile und bevorzugte Merkmale und Merkmalskombinationen ergeben sich insbesondere aus dem zuvor Beschriebenen sowie aus den Ansprüchen.

In einer Weiterentwicklung weist das Bildschirmsystem, insbesondere für ein Fahrzeug, insbesondere Kraftfahrzeug, zumindest einem Bildschirm sowie ein Haltesystem auf, wobei der zumindest eine Bildschirm durch das Haltesystem an einem Trägerelement des Fahrzeugs befestigbar ist oder befestigt ist.

Im Folgenden soll die Erfindung anhand der Zeichnung näher erläutert werden. Dazu zeigen
- Figur 1: ein Haken für ein vorteilhaftes Bildschirmsystem,
- Figuren 2A bis 2D: das vorteilhafte Bildschirmsystem gemäß dem ersten Ausführungsbeispiel,
- Figur 3: das Bildschirmsystem gemäß einem zweiten Ausführungsbeispiel,
- Figur 4A bis 4C: das Bildschirmsystem gemäß einem dritten Ausführungsbeispiel, und
- Figuren 5A bis 5C: das Bildschirmsystem gemäß einem vierten Ausführungsbeispiel.

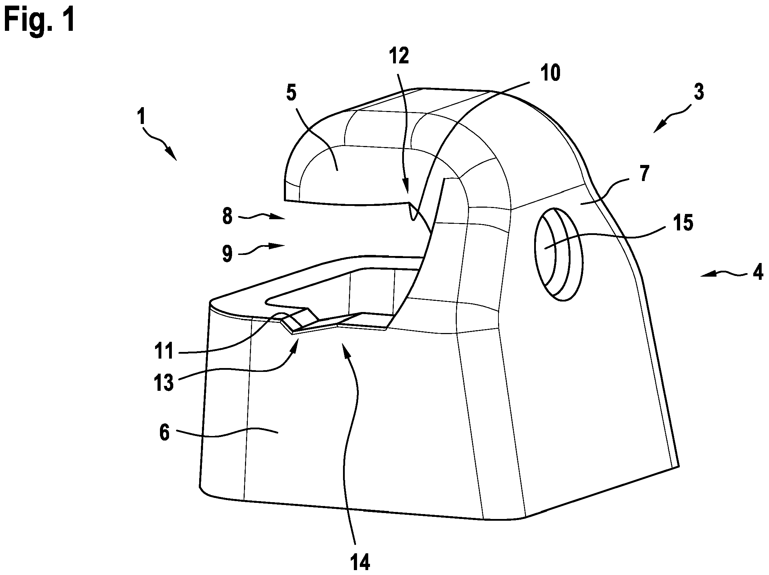

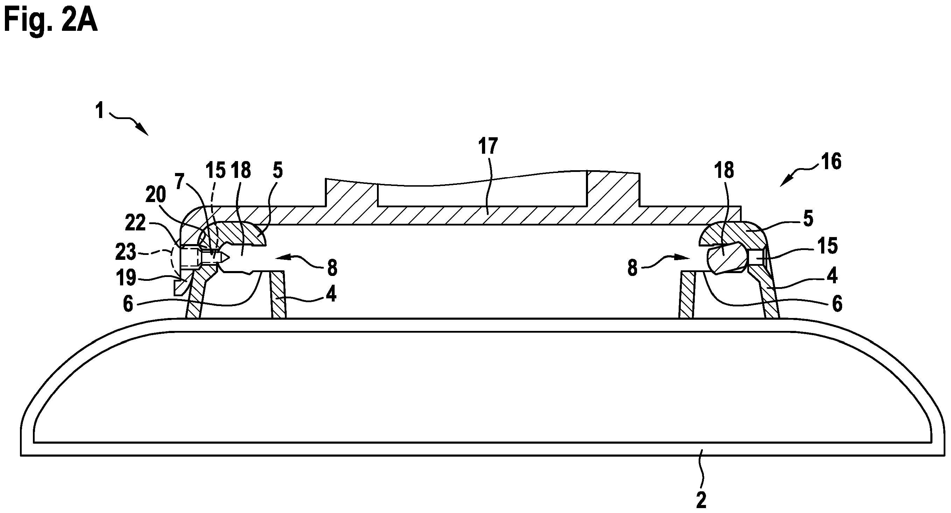

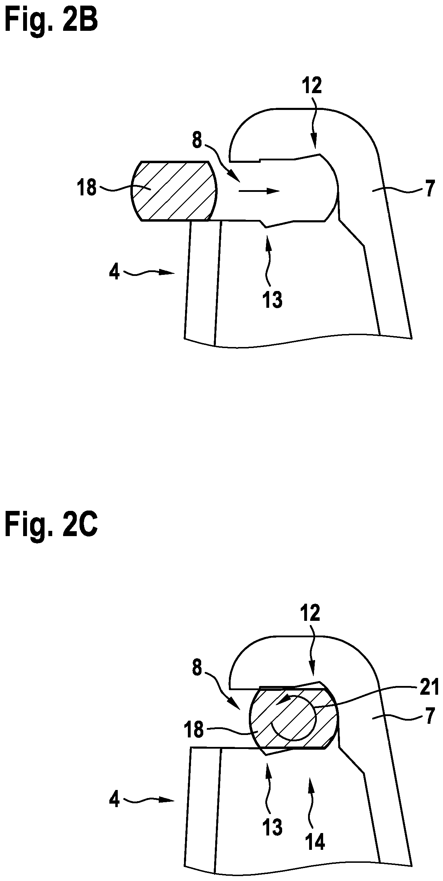

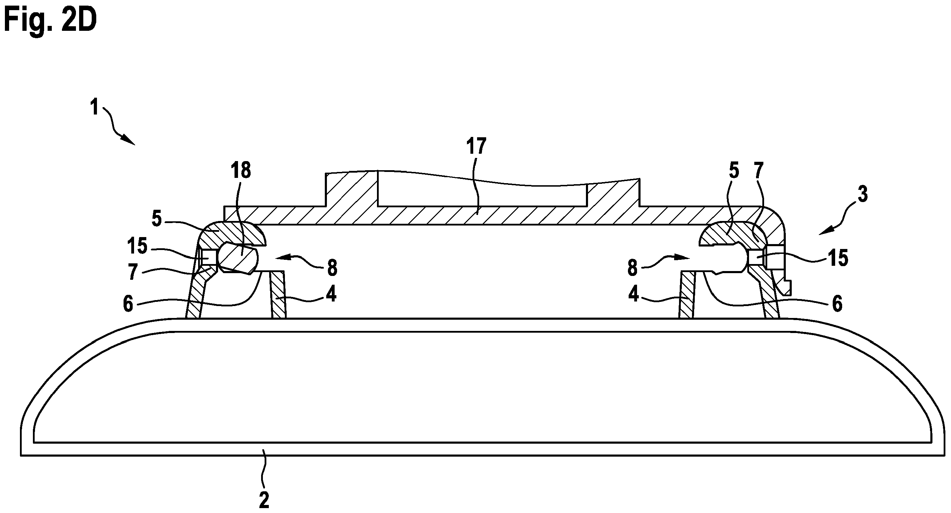

Figur 1 zeigt in einer dreidimensionalen Darstellung den wesentlichen Bestandteil eines im Folgenden beschriebenen Bildschirmsystems 1. Das Bildschirmsystem 1 weist zum Anordnen und Befestigen eines Bildschirms 2, wie er beispielhaft in Figur 2 gezeigt ist, ein Haltesystem 3 auf, das vielseitig einsetzbar und verwendbar ist. Wesentlicher Bestandteil des Haltesystems 3 ist der in Figur 1 gezeigte Haken 4. Der Haken 4 weist im Profil zwei einander gegenüberliegende Seitenwände 5, 6 sowie einen die Seitenwände 5, 6 miteinander verbindenden Boden 7 auf. Die Seitenwände 6, 5 verlaufen im Wesentlichen parallel zueinander und im Wesentlichen senkrecht zu dem Boden 7, sodass der Haken 4 im Wesentlichen U-förmig ausgebildet ist und zwischen den Seitenwänden 5, 6 eine bis in den Boden 7 reichende Bolzenaufnahme 8 bildet. Bis auf durch den Boden 7 sind die Seitenwände 5, 6 nicht miteinander verbunden, sodass die Bolzenaufnahme 8 an drei Seiten zugängig ist. Insbesondere an dem von dem Boden 7 abgewandten Ende der Seitenwände 5, 6 ergibt sich eine Aufnahmeöffnung 9, durch welche ein Haltebolzen seitlich eingeschoben werden kann, wie weiter unten näher erörtert. Alternativ kann der Haltebolzen auch axial, also auch parallel zum Boden 7 in die Bolzenaufnahme 8 eingeschoben werden.

Die Seitenwände 5, 6 verlaufen im Wesentlichen parallel zueinander, weisen jedoch jeweils eine Vertiefung 10, 11 auf, durch welche ein Hinterschnitt 12, 13 in der jeweiligen Seitenwand 5, 6 entsteht. Der jeweilige Hinterschnitte 12, 13 ist dabei derart ausgebildet, dass er in die Richtung wirkt, in welche der Haltebolzen seitlich beziehungsweise zumindest im Wesentlichen senkrecht zur Ebene des Bodens 7 in die Bolzenaufnahme 8 eingeschoben wird. Die Vertiefungen 10 und 11 weisen jeweils eine Anlagefläche auf, die parallel zueinander verlaufen. Auf deren Funktion wird weiter unten näher eingegangen.

Die Vertiefungen 11, 10 sind dabei unterschiedlich weit zum Boden 7 in der jeweiligen Seitenwand 5, 6 ausgebildet, wobei vorliegend die Vertiefung 10 näher zu dem Boden 7 ausgebildet ist als die Vertiefung 11. Hierdurch ergibt sich in der Bolzenaufnahme 8 ein Kippgelenk 14, das unten näher erörtert wird.

In dem Boden 7 ist außerdem eine Schraubenöffnung 15 ausgebildet, die optional mit einem Gewinde ausgestattet ist. Die Schraubenöffnung 15 mündet durch den Boden 7 in die Bolzenaufnahme 8.

Figuren 2A bis 2C zeigen das Bildschirmsystem 1 gemäß einem ersten Ausführungsbeispiel. Anhand von Figuren 2A bis 2C soll zunächst die Funktionsweise näher erläutert werden. Das Bildschirmsystem 1 ist derart ausgebildet, dass das Haltesystem zwei der Haken 4 aufweist, die beide an einer Rückseite des Bildschirms 2 unbeweglich befestigt sind. Die Haken 4 sind dabei auf gleicher Höhe an der Rückseite des Bildschirms 2 einander gegenüberliegend derart angeordnet, sodass ihre Bolzenaufnahmen 8 aufeinander zu weisen. Die beiden Haken 4 bilden somit ein erstes Paar 16 von Haken 4, die zur Befestigung des Bildschirms 2 an einem Trägerelement 17 dienen. Das Trägerelement 17 ist an einem Armaturenbrett oder Karosserieelement eines Kraftfahrzeugs insbesondere in der Nähe der A-Säule, befestigt. Das Trägerelement 17 weist einen Haltebolzen 18 auf, der fest mit dem Trägerelement 17 ausgebildet und insbesondere vertikal ausgerichtet ist. Beabstandet zu dem Haltebolzen 18 weist das Trägerelement 17 weiterhin einen Haltevorsprung 19 auf, der auf seiner dem Haltebolzen 18 zugewandten Innenseite eine Anlagefläche 20 für einen der Haken 4 bildet. Das Trägerelement 17 ist dabei derart in dem Fahrzeug angeordnet, dass der Haltebolzen 18 entfernt von einer Längsseite des Fahrzeugs beziehungsweise von einer Türseite des Fahrzeugs angeordnet ist, und der Haltevorsprung 19 nahezu der Türseite.

Zur Montage des Bildschirms 2 an dem Trägerelement 17 wird zunächst einer der Haken 4 an dem Haltebolzen 18 angeordnet.

Figuren 2B und 2C zeigen hierzu die Montageschritte anhand einer vergrößerten Darstellung des dem Haltebolzen 18 zugeordneten Hakens 4. In einem ersten Schritt, wie in Figur 2B gezeigt, wird der Haltebolzen 18 seitlich in die Bolzenaufnahme 8 eingeschoben. Der Haltebolzen 18 weist dabei eine von einem Kreis abweichende Form auf, insbesondere weist er zwei einander gegenüberliegenden parallel ausgerichtete gerade Anlageseiten auf. Der Querschnitt des Haltebolzens 18 entspricht somit dem eines Rechtecks, wobei die kurzen Kanten des Rechtecks gekrümmt sind. Die lichte Weite der Aufnahmeöffnung 9 ist dabei geringfügig größer ausgebildet als die Breite des Haltebolzens 18 beziehungsweise als der Abstand zwischen den flachen Anlageseiten des Haltebolzens 18 zueinander. Die Länge des Haltebolzens 18, senkrecht zu seiner Breite, ist hingegen größer als die lichte Weite. Damit ist der Bolzen 18 in einer Ausrichtung in die Bolzenaufnahme 8 einführbar, wie in Figur 2B gezeigt.

Der Haltebolzen 18 wird bis zum Boden 7 in die Bolzenaufnahme 8 eingeschoben. Die Vertiefungen 10, 11 sind derart in den Seitenwänden 5, 6 ausgebildet, dass sie zusammen mit dem Haltebolzen 18 das Kipplager 14 bilden, durch welches der Haltebolzen 18 mit seinen dem Boden 7 zugewandten Ende und seinem von dem Boden 7 abgewandten Ende jeweils in einem der Vertiefungen 10, 11 hinein kippbar beziehungsweise verdrehbar ist, bis er an den zuvor genannten Auflageflächen der Vertiefungen 10, 11 anliegt, die den Schwenkbereich des Haltebolzens 18 begrenzen, wie durch einen Pfeil 21 in Figur 2C gezeigt. Durch das Verkippen gelangt der Haltebolzen 18 in eine Hintergriffposition mit dem Haken 4, sodass er nicht mehr seitlich aus dem Haken 4 beziehungsweise aus der Aufnahmeöffnung 9 herausgezogen werden kann. Gegebenenfalls lässt er sich axial, also entlang seiner Längserstreckung, in der Bolzenaufnahme 8 verschieben, dies jedoch auch nur dann, wenn der von dem Kreis abweichende Querschnitt des Haltebolzens 18 sich über eine größere Länge des Haltebolzens 18 erstreckt. Optional weist der Haltebolzen durchgehend den in Figur 2B und 2C gezeigten Querschnitt auf. Alternativ weist der Haltebolzen diesen Querschnitt nur in einem begrenzten Halteabschnitt auf, der nur geringfügig größer ist als die Breite des Hakens 4, um dort den Hintergriff bilden zu können.

Weil der Haltebolzen 18 fest mit dem Trägerelement 17 verbunden ist, wird bei der Montage nicht der Haltebolzen 18, sondern der Bildschirm 2 mit den Haken 4 um den Haltebolzen 18 herum verschwenkt, sodass dieser an die Hintergriffposition gelangt, wie in Figur 2A gezeigt. Der Bildschirm 2 wird somit durch zuerst eine translatorische Bewegung, gefolgt von einer rotatorischen Bewegung an dem Trägerelement 17 verrastet. Dabei wird gleichzeitig der andere Haken 4 des Paars 16 von Haken an den Haltevorsprung 19 derart herangeschwenkt, dass dieser Haken an der Anlagefläche 20 zum Anlegen kommt. In dem Haltevorsprung 19 ist eine weitere Schraubenöffnung 22 ausgebildet, die in der Endmontagestellung des Bildschirms 2 und dem Trägerelement 17 mit der Schraubenöffnung 15 des ihm zugeordneten Hakens 4 fluchtet.

Anschließend wird durch die weitere Schraubenöffnung 22 und die Schraubenöffnung 15 eine Befestigungsschraube, in Figur 2A nur gestrichelt dargestellt, geführt, die insbesondere mit einem Innengewinde der Schraubenöffnung 15 zusammenwirkt. Insbesondere wird die Befestigungsschraube 23 in das Innengewinde der Schraubenöffnung 15 eingeschraubt, und dadurch der Bildschirm 2 dauerhaft an dem Trägerelement 17 befestigt. Durch ein vordefiniertes Übermaß des Trägerelements 17 wird zwischen dem Haltebolzen 18 und dem Haltevorsprung 19 eine Verpressung erzeugt, die auf die Haken 4 wirkt und dadurch eine spielfreie Verbindung zwischen dem Paar 16 von Haken 4 und dem Trägerelement 17 gewährleistet. Figur 2A zeigt insoweit das Ausführungsbeispiel, bei welchem der Bildschirm 2 in einem Linkslenkerfahrzeug auf der Fahrerseite befestigt wird.

Figur 2D zeigt, dass der Bildschirm 2 mit dem gleichen Haltesystem 3 auch an der Beifahrerseite des Fahrzeugs auf die gleiche Art und Weise befestigbar ist. Aufgrund der gleichen Ausbildung der Haken 4, sind diese spiegelbildlich zueinander an dem Bildschirm 2 angeordnet. Das Trägerelement 17 auf der Beifahrerseite ist jedoch spiegelverkehrt zu dem Trägerelement 17 auf der Fahrerseite ausgebildet, sodass nunmehr der Haltebolzen 18 links angeordnet ist, und damit weiter von der Türseite des Fahrzeugs entfernt als der Haltevorsprung 19. Die Montagereihenfolge ist jedoch die oben Beschriebene, wirkt jedoch spiegelverkehrt zu der von Figur 2A. Es zeigt sich dabei jedoch, dass mit ein und demselben Haken 4, unterschiedliche Montagevarianten für das Bildschirmsystem 1 geboten werden.

Im Folgenden werden noch weitere Montagemöglichkeiten erläutert.

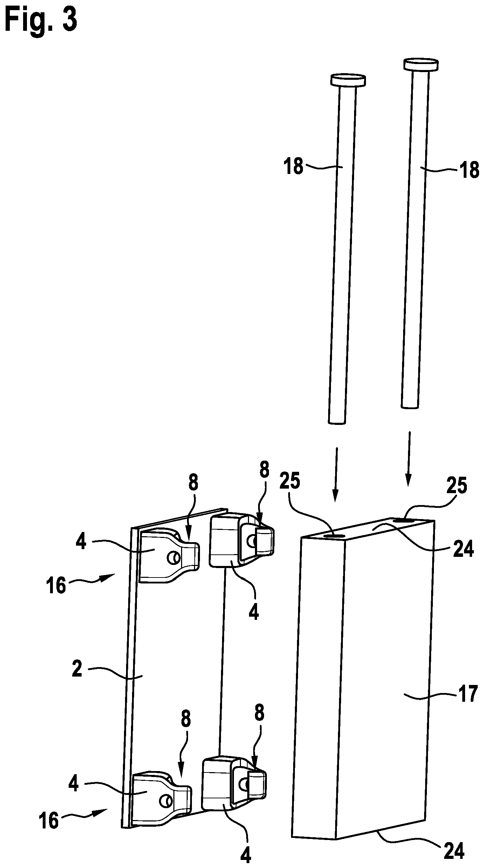

Figur 3 zeigt in einer perspektivischen Explosionsdarstellung eine weitere Montagemöglichkeit des Bildschirmsystems 1. An der Rückseite des Bildschirms 2, von dem hier nur ein Abschnitt gezeigt ist, sind zwei Paare 16 der Haken 4, wie zuvor beschrieben, angeordnet, wobei die beiden Paare 16 beabstandet derart zueinander angeordnet sind, dass jeweils die Bolzenaufnahmen 8 von zwei Haken 4 der benachbarten Paare 16 miteinander fluchten, sodass durch beide Bolzenaufnahmen 8 jeweils ein Haltebolzen 18 axial hindurchführbar ist.

Das Trägerelement 17 ist in diesem Fall wannenförmig ausgebildet und weist somit zwei einander gegenüberliegende Stirnseiten 24 auf, in welchen Durchgangsöffnungen 25 ausgebildet sind. Die Durchgangsöffnungen 25 weisen dabei einen Querschnitt auf, der das Hindurchführen jeweils eines Haltebolzens 18 erlaubt.

Der Bildschirm 2 wird zunächst mit den Haken 4 in der Vertiefung des wannenförmig ausgebildeten Trägerelements 17 eingeschoben. Anschließend werden die Haltebolzen 18 durch die Durchgangsöffnung 25 und axial durch die Bolzenaufnahmen 8 der jeweils miteinander fluchtenden Haken 4 geführt. Aufgrund des vorteilhaften Hintergriffs der Haken und einer Form der Haltebolzen 18, wie sie vorstehend beschrieben wurde, ergibt sich dadurch ein einfaches Verrasten des Bildschirms 2 an dem Trägerelement 17. Diese Montage ist vorteilhaft, weil an beiden Seiten des Bildschirms 2 und auf der Rückseite wenig Platz für die Montage zur Verfügung steht. Durch ein Verdrehen der Haltebolzen 18 werden die Haken 4 in der Vertiefung des Trägerelements 17 verrastet. Optional sind die Haltebolzen 18 in diesem Ausführungsbeispiel in ihrem Querschnitt derart ausgebildet, dass er verdrehsicher in die Bolzenaufnahme 8 axial einschiebbar ist. Dazu weist der Haltebolzen 18 einen Querschnitt auf, der dem Querschnitt der Bolzenaufnahme 8, wie beispielsweise in Figur 2B gezeigt, entspricht. Hierdurch ist ein nachträgliches Verdrehen der Haltebolzen zum Verrasten nicht notwendig, wodurch ein ungewolltes Entrasten beziehungsweise Verdrehen der Haltebolzen in eine freie Position sicher und einfach verhindert ist. Alternativ weisen die Haltebolzen 18 gemäß einem weiteren Ausführungsbeispiel, wie es in Figur 3 gezeigt ist, einen kreisförmigen Querschnitt auf, sind also in den Bolzenaufnahmen 8 verdrehbar gehalten, wobei ihr Außendurchmesser größer ist als die lichte Weite der Aufnahmeöffnung 9, so dass sie radial formschlüssig in den Bolzenaufnahmen 8 liegen.

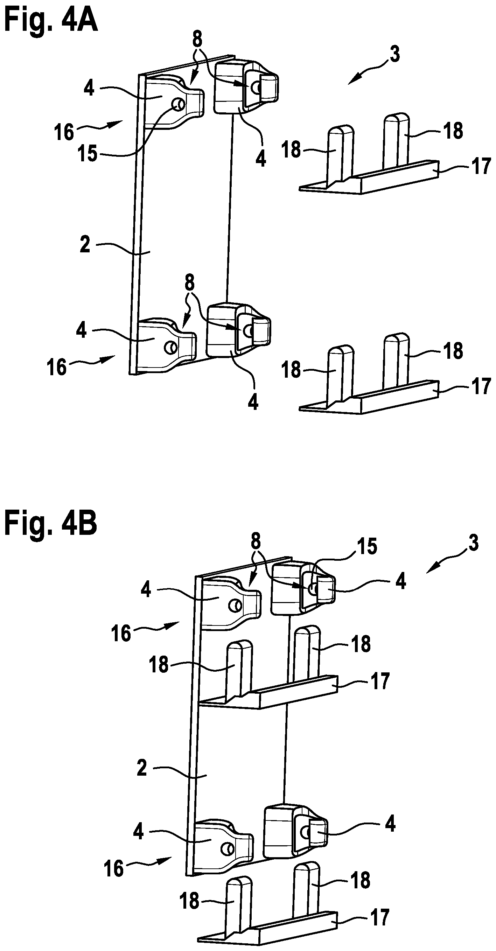

Figuren 4A bis 4C zeigen ein weiteres Ausführungsbeispiel des Haltesystems 3 für das Bildschirmsystem 1. Im Unterschied zu dem vorhergehenden Ausführungsbeispiel sind die Haltebolzen 18 hierbei fest an dem Trägerelement 17 angeordnet. Dabei ist vorliegend für jeden Haken 4 ein eigener Haltebolzen 18 vorhanden. Damit bilden die Haltebolzen 18 ebenfalls zwei Paare von Haltebolzen 18, die beabstandet zueinander derart angeordnet sind, dass ihre Anordnung der Anordnung der Haken 4 an dem Bildschirm 2 entspricht.

Zur Montage wird der Bildschirm 2 mit den Haken 4 von oben auf die Haltebolzen 18 aufgesteckt, wie in Figur 4B gezeigt. Auch hier sind die Haltebolzen 18 dazu ausgebildet, in die Bolzenaufnahmen 8 der Haken 4 axial eingeschoben zu werden. Gemäß dem vorliegenden Ausführungsbeispiel weicht dabei die Querschnittsform der Haltebolzen 18 von einer Kreisform ab.

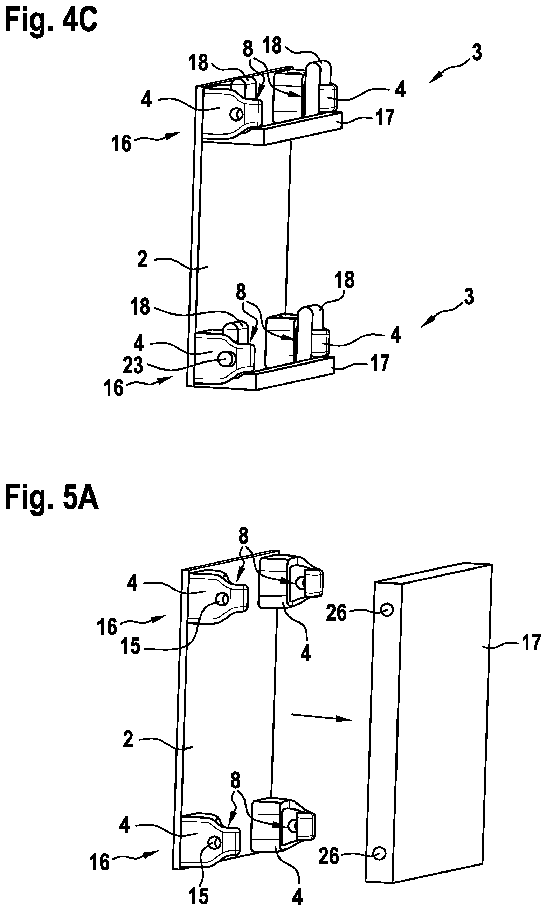

Abschließend werden optional, wie in Figur 4C gezeigt, in eine oder mehrere der Schraubenöffnungen 15 jeweils eine der Befestigungsschrauben 23 eingeschraubt, um an ihrem freien Ende auf den jeweils in der Bolzenaufnahme 8 liegenden Haltebolzen 18 zu treffen und diesen mit einer Druckkraft zu beaufschlagen. Dadurch ist eine Sicherung des Bildschirms 2 an dem Trägerelement 17 einfach gewährleistet. Insbesondere werden die Befestigungsschrauben 23 von der Türseite her in die der Türseite zugewandten Schraubenöffnungen 15 eingeschraubt, wodurch sich eine einfache Montage ergibt. Durch die Druckkraft werden die Haltebolzen 18 in der jeweiligen Bolzenaufnahme 8 verklemmt und damit reibschlüssig in der jeweiligen Bolzenaufnahme 18 arretiert.

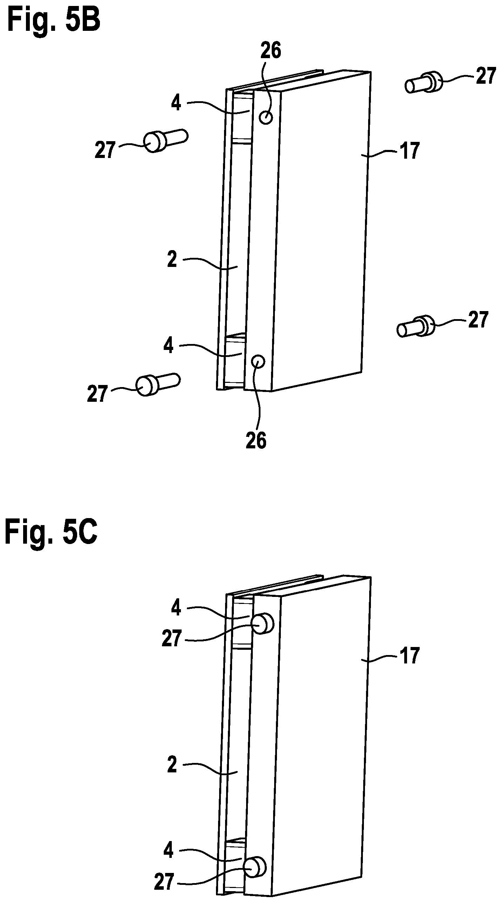

Figuren 5A bis 5C zeigen ein weiteres Ausführungsbeispiel des Haltesystems 3, wobei die gleiche Anordnung der Haken 4, wie sie in dem vorhergehenden Ausführungsbeispiel gezeigt wurde, vorgesehen ist. Auch hier ist das Trägerelement 17 wannenförmig ausgebildet, jedoch mit dem Unterschied, dass Durchgangsöffnungen 26 in den Längsseiten des Trägerelements 17 ausgebildet sind, und nicht in den Stirnseiten, wie in Figur 3 gezeigt. Zu Montage wird der Bildschirm 2 mit den Haken 4 zunächst in die Vertiefung des Trägerelements 17 eingeschoben, wie in Figur 5A gezeigt.

Anschließend werden durch die nur seitlich angeordneten Durchgangsöffnungen 26 Befestigungsstifte 27 durch die Durchgangsöffnungen 26, die nun mit den Schraubenöffnungen 15 fluchten, eingesteckt, sodass sie auch in die jeweilige Schraubenöffnung 15 eindringen. Damit wird der Bildschirm 2 durch die quer in die Schraubenöffnung 15 eingesteckten Befestigungsstifte 27 an dem Trägerelement 17 arretiert. Alternativ zu den Befestigungsstiften 27, können auch die Befestigungsschrauben 23 verwendet werden, die seitlich durch die Durchgangsöffnungen 26 in das Innengewinde der jeweiligen Schraubenöffnung 15 eingeschraubt werden. Die Durchgangsöffnungen 26 sind dabei kleiner ausgebildet als der jeweilige Schraubenkopf, wie auch in den vorhergehenden Ausführungsbeispielen, sodass durch das Anschrauben eine sichere Verbindung zwischen dem jeweiligen Haken 4 und dem Trägerelement 17 erreicht wird, wie beispielsweise in Figur 5C gezeigt.

Insgesamt zeigt sich somit, dass das Haltesystem 3 trotz einer geringen Anzahl von verschiedenen Bauteilen, und basierend auf einfach gestalteten Bauteilen, eine hohe Variabilität von einer Montage eines Bildschirms 2 im Fahrzeug erlaubt, die insbesondere auch bei geringen Bauraumverhältnissen eine einfache Montage ermöglicht.

## Patentansprüche

1. Haltesystem (3) zur Befestigung eines Bildschirms (2) an einem Trägerelement (17) eines Fahrzeugs, mit einer an dem Bildschirm (2) angeordneten oder anordenbaren Hakenanordnung, die zumindest ein Paar (16) gleicher Haken (4) aufweist, wobei jeder Haken (4) zwei einander gegenüberliegende Seitenwände (5,6) und einen die Seitenwände (5,6) miteinander verbindenden Boden (7) aufweist, die zusammen eine ansonsten offene Bolzenaufnahme (8) zur Aufnahme eines Haltebolzens (18) bilden, wobei eine in die Bolzenaufnahme (8) mündende Schraubenöffnung (15) in dem Boden (7) ausgebildet ist, und wobei die Haken (4) des Paars (16) beabstandet zueinander unbeweglich derart an dem Bildschirm (2) angeordnet sind, dass die Bolzenaufnahmen (8) aufeinander zu weisend einander gegenüber liegen.

2. Haltesystem nach Anspruch 1, **dadurch gekennzeichnet, dass** die jeweilige Bolzenaufnahme (8) zumindest einen Hinterschnitt (12,13) aufweist.

3. Haltesystem nach einem der vorhergehenden Ansprüche, **dadurch gekennzeichnet, dass** eine an dem Trägerelement (17) angeordnete Bolzenanordnung vorhanden ist, die zumindest einen Haltebolzen (18) aufweist, der in eine der Bolzenaufnahmen (8) einführbar ist.

4. Haltesystem nach einem der vorhergehenden Ansprüche, **dadurch gekennzeichnet, dass** für zumindest einen der Haken (4) eine Befestigungsschraube (23) vorhanden ist, die einerseits die Schraubenöffnung (15) durchgreift und andererseits mit einem Innengewinde der Schraubenöffnung (15) und/oder einem Innengewinde des in der Bolzenaufnahme (8) eingeführten Haltebolzens (18) verschraubt oder verschraubbar ist.

5. Haltesystem nach einem der vorhergehenden Ansprüche, **dadurch gekennzeichnet, dass** in der Bolzenaufnahme (8) eines Hakens (4) des Paars (16) der Haltebolzen (18) und in der Schraubenöffnung (15) des anderen Hakens (4) des Paars (16) die Befestigungsschraube (23) oder ein Befestigungsstift (27) angeordnet ist.

6. Haltesystem nach einem der vorhergehenden Ansprüche, **dadurch gekennzeichnet, dass** an dem Trägerelement (17) der zumindest eine Haltebolzen (18) sowie ein eine weitere Schraubenöffnung (22) aufweisender Haltevorsprung (19) beabstandet und einander gegenüberliegend derart angeordnet sind, sodass der Haltebolzen (18) mit dem einen Haken (4) des Bildschirms (2) zusammenwirkt, und die Befestigungsschraube (23) oder der Befestigungsstift (27) durch die weitere Schraubenöffnung (15) und die Schraubenöffnung (15) des anderen Haken (4) des Paars (16) geführt ist, um den Bildschirm (2) an dem Trägerelement (17) zu befestigen.

7. Haltesystem nach einem der vorhergehenden Ansprüche, **dadurch gekennzeichnet, dass** der Haken (4) und der Haltebolzen (18) in der Bolzenaufnahme (8) ein Kipplager (14) bilden, um welches der Haltebolzen (18) innerhalb eines begrenzten Bereichs verschwenkbar ist.

8. Haltesystem nach einem der vorhergehenden Ansprüche, **dadurch gekennzeichnet, dass** der Haltebolzen (18) in der Bolzenaufnahme (8) zwischen einer formschlüssig in der Bolzenaufnahme (8) arretierten Hintergriffposition und einer seitlich aus der Bolzenaufnahme (8) entfernbaren Freigabeposition verschwenkbar ist.

9. Haltesystem nach einem der vorhergehenden Ansprüche, **dadurch gekennzeichnet, dass** der Haltevorsprung (19) des Trägerelements (17) derart ausgebildet ist, dass der ihm zugeordnete Haken (4) an den Haltevorsprung (19) heran schwenkbar ist, sodass die Schraubenöffnung (15) und die weitere Schraubenöffnung (22) miteinander fluchten.

10. Haltesystem nach einem der vorhergehenden Ansprüche, **dadurch gekennzeichnet, dass** zumindest zwei Haltebolzen (18) vorhanden sind, wobei jeweils einer der Haltebolzen (18) in eine der Bolzenaufnahmen (8) axial eingeschoben oder einschiebbar ist.

11. Haltesystem nach einem der vorhergehenden Ansprüche, **dadurch gekennzeichnet, dass** das Trägerelement (17) für jeden der Haltebolzen (18) zumindest eine Durchgangsöffnung (25,26) aufweist und derart ausgebildet ist, dass die Bolzenaufnahmen (8) fluchtend mit den Durchgangsöffnungen (25) positionierbar sind, um durch das Einschieben eines Haltebolzens (18) durch eine der Durchgangsöffnungen (25) und die zugeordnete Bolzenaufnahme (8) des zugeordneten Hakens (4) den Bildschirm (2) an dem Trägerelement(17) zu befestigen.

12. Haltesystem nach einem der vorhergehenden Ansprüche, **dadurch gekennzeichnet, dass** das Trägerelement (17) wannenförmig ausgebildet ist, sodass es eine wannenförmige Vertiefung aufweist in welcher die Haken (4) anordenbar sind.

13. Haltesystem nach einem der vorhergehenden Ansprüche, **dadurch gekennzeichnet, dass** an dem Trägerelement (17) zumindest zwei Haltebolzen (18) fest angeordnet sind, sodass zumindest die Haken (4) eines Hakenpaars (16) auf die Haltebolzen (18) in ihrer Längserstreckung aufschiebbar sind, um den Bildschirm (2) an dem Trägerelement (17) zu befestigen.

14. Haltesystem nach einem der vorhergehenden Ansprüche, **dadurch gekennzeichnet, dass** die Hakenanordnung zwei Paare (16) von Haken (4) aufweist, die derart angeordnet sind, dass die Bolzenaufnahmen (8) benachbarter Haken (4) der Paare (16) miteinander fluchten, um einen gemeinsamen Haltebolzen (18) oder zwei miteinander fluchtende Haltebolzen (18) aufzunehmen.

15. Bildschirmsystem (1) für ein Fahrzeug, insbesondere Kraftfahrzeug, mit zumindest einem Bildschirm (2) und einem Haltesystem (3) gemäß einem der Ansprüche 1 bis 14.

## Claims

1. Holding system (3) for fastening a display screen (2) to a supporting element (17) of a vehicle, having a hook assembly which is disposed, or able to be disposed, on the display screen (2) and has at least one pair (16) of identical hooks (4), wherein each hook (4) has two mutually opposite lateral walls (5, 6) and a base (7) connecting the two lateral walls (5, 6) to one another, said walls conjointly forming an otherwise open bolt receptacle (8) for receiving a holding bolt (18), wherein a screw opening (15) that opens into the bolt receptacle (8) is configured in the base (7), and wherein the hooks (4) of the pair (16) are disposed on the display screen (2) so as to be spaced apart and mutually immovable in such a manner that the bolt receptacles (8) lie opposite and pointing towards one another.

2. Holding system according to Claim 1, **characterized in that** the respective bolt receptacle (8) has at least one undercut (12, 13).

3. Holding system according to either of the preceding claims, **characterized in that** a bolt assembly which is disposed on the supporting element (17) and has at least one holding bolt (18) that is able to be introduced into one of the bolt receptacles (8) is present.

4. Holding system according to one of the preceding claims, **characterized in that** a fastening screw (23) which penetrates the screw opening (15), on the one hand, and is screwed, or able to be screwed, on the other hand, to an internal thread of the screw opening (15) and/or an internal thread of the holding bolt (18) introduced into the bolt receptacle (8) is present for at least one of the hooks (4).

5. Holding system according to one of the preceding claims, **characterized in that** the holding bolt (18) is disposed in the bolt receptacle (8) of one hook (4) of the pair (16), and the fastening screw (23) or a fastening pin (27) is disposed in the screw opening (15) of the other hook (4) of the pair (16).

6. Holding system according to one of the preceding claims, **characterized in that** the at least one holding bolt (18) as well as a holding protrusion (19) having a further screw opening (22) are disposed on the supporting element (17) so as to be spaced apart and mutually opposite in such a manner that the holding bolt (18) interacts with the one hook (4) of the display screen (2), and the fastening screw (23) or the fastening pin (27) is guided through the further screw opening (15) and the screw opening (15) of the other hook (4) of the pair (16) so as to fasten the display screen (2) to the supporting element (17).

7. Holding system according to one of the preceding claims, **characterized in that** the hook (4) and the holding bolt (18) in the bolt receptacle (8) form a rocker bearing (14) about which the holding bolt (18) is pivotable within a limited range.

8. Holding system according to one of the preceding claims, **characterized in that** the holding bolt (18) in the bolt receptacle (8) is pivotable between a rearward engaging position in which said holding bolt (18) is locked in a form-fitting manner in the bolt receptacle (8), and a releasing position in which said holding bolt (18) is able to be removed laterally from the bolt receptacle (8).

9. Holding system according to one of the preceding claims, **characterized in that** the holding protrusion (19) of the supporting element (17) is configured in such a manner that the hook (4) assigned thereto is pivotable towards the holding protrusion (19) such that the screw opening (15) and the further screw opening (22) are mutually aligned.

10. Holding system according to one of the preceding claims, **characterized in that** at least two holding bolts (18) are present, wherein one of the holding bolts (18) is in each case pushed, or able to be pushed, axially into one of the bolt receptacles (8) .

11. Holding system according to one of the preceding claims, **characterized in that** the supporting element (17) has at least one through opening (25, 26) for each of the holding bolts (18) and is configured in such a manner that the bolt receptacles (8) are able to be positioned so as to be aligned with the through openings (25) in order to fasten the display screen (2) to the supporting element (17) by inserting a holding bolt (18) through one of the through openings (25) and the assigned bolt receptacle (8) of the assigned hook (4).

12. Holding system according to one of the preceding claims, **characterized in that** the supporting element (17) is configured in the shape of a trough such that said supporting element (17) has a trough-shaped depression in which the hooks (4) are able to be disposed.

13. Holding system according to one of the preceding claims, **characterized in that** at least two holding bolts (18) are fixedly disposed on the supporting element (17) such that at least the hooks (4) of one pair (16) of hooks are able to be pushed onto the holding bolts (18) in terms of the longitudinal extent of the latter in order for the display screen (2) to be fastened to the supporting element (17).

14. Holding system according to one of the preceding claims, **characterized in that** the hook assembly has two pairs (16) of hooks (4), the latter being disposed in such a manner that the bolt receptacles (8) of adjacent hooks (4) of the pairs (16) are mutually aligned so as to receive one common holding bolt (18) or two mutually aligned holding bolts (18) .

15. Display screen system (1) for a vehicle, in particular a motor vehicle, having at least one display screen (2) and a holding system (3) according to one of Claims 1 to 14.

## Revendications

1. Système de maintien (3) destiné à fixer un écran (2) à un élément porteur (17) d'un véhicule, comportant un agencement de crochets disposé ou pouvant être disposé sur l'écran (2), lequel agencement comprend au moins une paire (16) de crochets (4) identiques, chaque crochet (4) comprenant deux parois latérales (5, 6) en regard l'une de l'autre et une base (7) reliant les parois latérales (5, 6) l'une à l'autre, lesquelles forment conjointement un logement de boulon (8) par ailleurs ouvert pour la réception d'un boulon de maintien (18), une ouverture filetée (15) débouchant dans le logement de boulon (8) étant réalisée dans la base (7), et les crochets (4) de la paire (16) étant disposés de manière espacée l'un de l'autre et immobile sur l'écran (2), de telle sorte que les logements de boulon (8) soient en regard l'un de l'autre de manière tournée l'un vers l'autre.

2. Système de maintien selon la revendication 1, **caractérisé en ce que** le logement de boulon (8) respectif comprend au moins une contre-dépouille (12, 13).

3. Système de maintien selon l'une des revendications précédentes, **caractérisé en ce qu'**un agencement de boulons disposé sur l'élément porteur (17) est présent, lequel agencement comprend au moins un boulon de maintien (18) qui peut être inséré dans l'un des logements de boulon (8).

4. Système de maintien selon l'une des revendications précédentes, **caractérisé en ce qu'**une vis de fixation (23) est présente pour au moins l'un des crochets (4), laquelle, d'une part, traverse l'ouverture filetée (15) et, d'autre part, est vissée ou peut être vissée sur un filetage intérieur de l'ouverture filetée (15) et/ou sur un filetage intérieur du boulon de maintien (18) inséré dans le logement de boulon (8).

5. Système de maintien selon l'une des revendications précédentes, **caractérisé en ce que** la vie de fixation (23) ou une goupille de fixation (27) est disposée dans le logement de boulon (8) d'un crochet (4) de la paire (16) de boulons de maintien (18) et dans l'ouverture filetée (15) de l'autre crochet (4) de la paire (16).

6. Système de maintien selon l'une des revendications précédentes, **caractérisé en ce que** l'au moins un boulon de maintien (18) ainsi qu'une saillie de maintien (19) comprenant une autre ouverture filetée (22) sont disposés de manière espacée et en regard l'un de l'autre sur l'élément porteur (17), de sorte que le boulon de maintien (18) coopère avec l'un des crochets (4) de l'écran (2), et que la vis de fixation (23) ou la goupille de fixation (27) soit guidée à travers l'autre ouverture filetée (15) et l'ouverture filetée (15) de l'autre crochet (4) de la paire (16), afin de fixer l'écran (2) à l'élément porteur (17).

7. Système de maintien selon l'une des revendications précédentes, **caractérisé en ce que** le crochet (4) et le boulon de maintien (18) forment dans le logement de boulon (8) un palier oscillant (14) autour duquel le boulon de maintien (18) peut être pivoté à l'intérieur d'une région limitée.

8. Système de maintien selon l'une des revendications précédentes, **caractérisé en ce que** le boulon de maintien (18) peut être pivoté dans le logement de boulon (8) entre une position d'entrée en prise par l'arrière bloquée dans le logement de boulon (8) par complémentarité de formes et une position de libération pouvant être retirée latéralement du logement de boulon (8) .

9. Système de maintien selon l'une des revendications précédentes, **caractérisé en ce que** la saillie de maintien (19) de l'élément porteur (17) est réalisée de telle sorte que le crochet (4) qui lui est associé peut être rapproché de la saillie de maintien (19) par pivotement, de sorte que l'ouverture filetée (15) et l'autre ouverture filetée (22) soient alignées l'une avec l'autre.

10. Système de maintien selon l'une des revendications précédentes, **caractérisé en ce qu'**au moins deux boulons de maintien (18) sont présents, l'un des boulons de maintien (18) étant introduit ou pouvant être introduit axialement dans l'un des logements de boulon (8) respectivement.

11. Système de maintien selon l'une des revendications précédentes, **caractérisé en ce que** l'élément porteur (17) comprend au moins une ouverture traversante (25, 26) pour chacun des boulons de maintien (18) et est réalisé de telle sorte que les logements de boulon (8) peuvent être positionnés en alignement avec les ouvertures traversantes (25), afin de fixer l'écran (2) à l'élément porteur (17) par l'introduction d'un boulon de maintien (18) à travers l'une des ouvertures traversantes (25) et le logement de boulon (8) associé du crochet (4) associé.

12. Système de maintien selon l'une des revendications précédentes, **caractérisé en ce que** l'élément porteur (17) est réalisé en forme de bac, de sorte qu'il comprend un évidement en forme de bac dans lequel les crochets (4) peuvent être disposés.

13. Système de maintien selon l'une des revendications précédentes, **caractérisé en ce qu'**au moins deux boulons de maintien (18) sont disposés fixement sur l'élément porteur (17), de sorte qu'au moins les crochets (4) d'une paire de crochets (16) puissent être enfilés sur les boulons de maintien (18) dans leur étendue longitudinale, afin de fixer l'écran (2) à l'élément porteur (17).

14. Système de maintien selon l'une des revendications précédentes, **caractérisé en ce que** l'agencement de crochets comprend deux paires (16) de crochets (4) qui sont disposées de telle sorte que les logements de boulon (8) de crochets (4) adjacents des paires (16) soient alignés l'un avec l'autre, afin de loger un boulon de maintien (18) commun ou deux boulons de maintien (18) alignés l'un avec l'autre.

15. Système d'écran (1) pour un véhicule, en particulier un véhicule automobile, comportant au moins un écran (2) et un système de maintien (3) selon l'une des revendications 1 à 14.
